# EUROPÄISCHE PATENTSCHRIFT

(11) **EP 0 639 506 B1**
(45) Veröffentlichungstag und Bekanntmachung des Hinweises auf die Patenterteilung: **14.05.1997**
(21) Anmeldenummer: 94111933.1
(22) Anmeldetag: 30.07.1994
(51) Int. Cl.: B65D 6/16, E05D 3/04

(54) **Transportbehälter**
Transport container
Récipient de transport

(30) Priorität: 06.08.1993 DE 9311769 U
(43) Veröffentlichungstag der Anmeldung: 22.02.1995
(73) Patentinhaber: MAUSER-WERKE GmbH, D-50321 Brühl (DE)
(72) Erfinder: Schubart, Gunter, D-69429 Waldbrunn (DE)

(56) Entgegenhaltungen:
- EP-A- 0 045 152
- WO-A-94/10049
- DE-A- 2 734 964

## Beschreibung

Die Erfindung betrifft einen geschlossenen, zusammenklappbaren bzw. zusammenfaltbaren Mehrweg-Transportbehälter nach dem Oberbegriff des Anspruchs 1.
Zusammenlegbare Transportbehälter aus spritzgußgeformten zusammengefügten Einzelteilen sind allgemein bekannt, so z.B. aus dem deutschen Gebrauchsmuster DE-GM 91 02 843. Bei dem hieraus bekannten Kunststoff-Behälter sind zumindest zwei gegenüberliegende Seitenwandungen mittels Scharnieren verschwenkbar an einem mit der Bodenplatte einteilig verbundenem Flanschrand bzw. Rahmenteil befestigt. Aber auch geschlossene Mehrweg-Klappboxen mit zusätzlich gelenkig befestigtem Deckel bzw. Deckelhälften sind bekannt (siehe z.B. Neue Verpackung 6/92 S. 32 dessen gegenstand dem Oberbegriff des Anspruchs 1 entspricht).
Ein gattungsmäßiger Transportbehälter ist in der internationalen Veröffentlichungsschritt WO 94/10049 beschrieben (Stand der Technik nach Artikel 54(3)EPÜ). Bei diesem Behälter kann eine Seitenwandung horizontal verlaufend geteilt sein, wobei die Seitenwandungshälften jeweils oben und unten gelagert und um 270° nach oben und unten verschwenkbar ausgebildet sind. Über die besondere scharniermäßige Lagerung bzw. verschwenkbare Befestigung der Seitenwandungsteile sind in dieser Schritt jedoch keine näheren Angaben enthalten.
Bei nachstehender Erfindung ist in erster Linie an ein Mehrweg-Transportbehälter-System gedacht, das u.a. auch der Versorgung des Einzelhandels dienen soll und mit welchem die Verkaufsgüter zusammen mit der Umverpackung - die bisher aus nicht wiederverwertbaren Pappkartons besteht - direkt in das Verkaufsregal gestellt und aus dem Transport- bzw. jetzt Lagerbehälter durch eine geöffnete Seitenwandung entnommen werden können.
Bei Pappkarton-Umverpackungen ist es - insbesondere in Selbstbedienungsläden - bisher üblich, die Pappkartons direkt in die Regale einzustellen und den Verpackungsinhalt den Kunden durch Herausschneiden einer Seitenwandung zugänglich zu machen.
Eine vergleichsweise Handhabung ohne Auspacken der einzelnen Waren ist von einem weiteren Transportbehälter-System bekannt. Dabei besteht der dafür vorgesehene Transportbehälter aus drei separaten Einzelteilen, einem schalenförmigen Unterboden, einem mittleren umlaufenden zusammenfaltbaren Wandungsteil und einem schalenförmigen Oberboden, die zum Zwecke des Warentransportes ineinandergesteckt und mit Hilfe von äußeren Haltebändern zusammengehalten werden. Zur Wareneinlagerung der Verkaufsgüter werden die Haltebänder, der Oberboden und das faltbare Wandungsteil entfernt und die Waren mitsamt dem schalenförmigen Unterboden (Tray) in das Regal eingestellt.
Bei dem bekannten dreiteiligen Transport/Lagerungsbehälter ist es nachteilig, daß er aus mehreren separaten Einzelteilen besteht und davon immer ein Teil (nämlich die Unterbodenschale) für längere Zeit im Regal verbleiben muß, während die anderen Teile separat aufbewart oder in den Behälterkreislauf zurückgegeben werden.

Es ist Aufgabe der vorliegenden Erfindung, einen Mehrweg-Transportbehälter zu schaffen, der ein einfaches Entnehmen der Verkaufsgüter aus dem in die Verkaufsregale eingestellten Transport/Lagerbehälter gestattet und welcher danach als gesamte zusammengefaltete Einheit wieder in den Behälterkreislauf zurückgegeben werden kann. Eine störungsfreie Produktentnahme aus dem Behälter soll dabei auch bei einer Übereinanderstapelung mehrerer gleichartiger Behälter gewährleistet sein. Diese Aufgabe wird bei dem erfindungsgemäßen Mehrweg-Transportbehälter durch die Merkmale des kennzeichnenden Teils des Anspruchs 1 gelöst.
Die verschwenkbare Seitenwandung bzw. die nach oben verschwenkbare Seitenwandungshälfte weist somit eine mit dem verschwenkbar angelenkten Behälterdeckel bzw. der angrenzenden Behälterdeckelhälfte eine gemeinsame Schwenkachse auf. Vor dem Einstellen des gefüllt angelieferten Transportbehälters in das Verkaufsregal und seiner weiteren Verwendung als Lagerbehälter wird die Seitenwandung auf bzw. werden die beiden Seitenwandungshälften auf und unter den Behälter geklappt und eine große Entnahmeöffnung wird freigegeben. Die verschwenkte Seitenwandung bzw. Seitenwandungshälften behindern somit nicht die Produktentnahme aus einem über- oder untergestapelten anderen Behälter.
Das Einstellen des Transportbehälters mit geöffneter Entnahmeklappe ins Regal erspart ein zeit- und personalintensives Auspacken bzw. Umpacken der Verkaufsgüter. Nach dem Absetzen des Behälters im Regal wird dieser zum Lagerbehälter und der Behälterinhalt kann sofort auf einfache und schnelle Weise kundenfreundlich direkt aus dem Regal bzw. dem Behälter entnommen werden.
Mit der erfindungsgemäßen Ausführung des Mehrweg-Transportbehälters besteht somit die Möglichkeit, die Ware mitsamt geöffnetem Behälter - mit um 270° aufgeklappter und verriegelter Seitenwandung - direkt in das Verkaufsregal einzulagern und derart zugänglich zu machen, daß die Kunden wie bisher die Ware einzeln durch die aufgeklappte Seitenwandung aus dem Behälter entnehmen können.
Bei einer vorteilhaften Ausgestaltung der Erfindung ist vorgesehen, daß lediglich ein oberes Teilstück (= Stirnklappe) der Seitenwandung als Entnahmeklappe mit am oberen Deckelscharnier angelenkt und um 270° verschwenkbar gelagert ist, wobei die restliche Seitenwandung als seitlich und unten umlaufendes Rahmenteil verbleibt. Diese Ausführungsvariante mit dem verbleibenden Rahmenteil der Seitenwandung verleiht dem Lagerbehälter eine höhere Stabilität bzw. Stapelbelastbarkeit.
In einer weiteren Ausgestaltung der Erfindung ist auch vorgesehen, daß die verschwenkbare Seitenwandung oder/und der obere Behälterdeckel gegen unbefugtes Öffnen mittels entsprechender Plombierungsmittel wie z.B. Klebefolie, Plombier-Spreizstifte oder ähnlichem abschließbar bzw. plombierbar ist, um den Behälterinhalt gegen eine vorzeitige Entnahme durch unberechtigte Personen zu sichern.

Die Erfindung wird nachfolgend anhand eines in den Zeichnungen dargestellten Ausführungsbeispiels näher erläutert und beschrieben. Es zeigen:
- Figur 1: einen erfindungsgemäßen Transportbehälter mit nach oben verschwenkbarer Vorderwandung und
- Figur 2: den Transportbehälter mit geöffneter Vorderwandung.

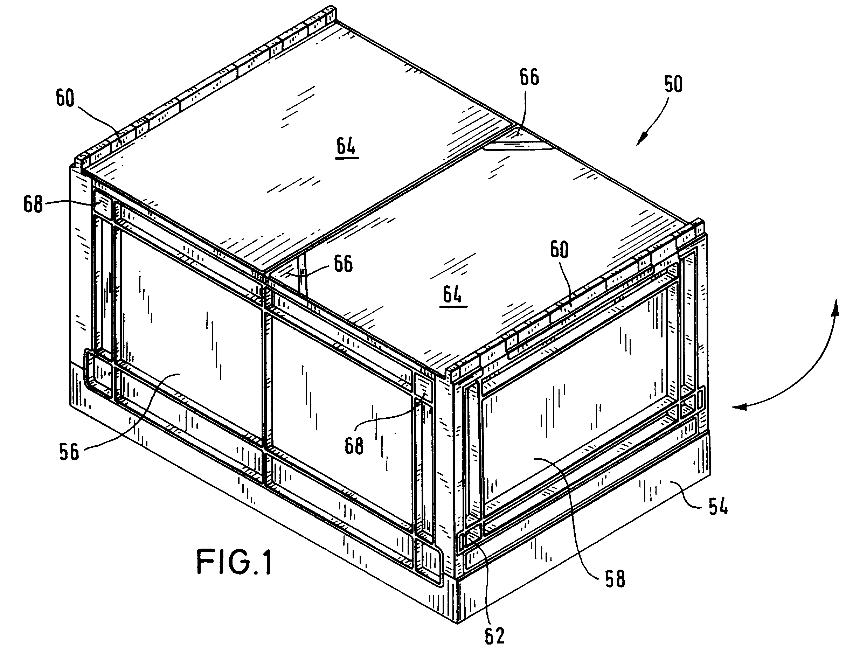

In Figur 1 ist ein zusammenklappbarer Mehrweg-Transportbehälter 50 aus thermoplastischem oder duroplastischem Kunststoff gezeigt, der in rechteckförmiger Kastenbauweise zwei schmale Stirnwandungen 58 und zwei längere Seitenwandungen56, zwei obere Deckelhälften 64 und am Behälterboden 52 ein äußeres umlaufendes Rahmenteil 54 mit vier Scharnieren zum Umklappen (jeweils nach innen) der Seitenwandungen 56,58 aufweist. Die einzelnen Bauteile sind im Spritzgußverfahren hergestellt.

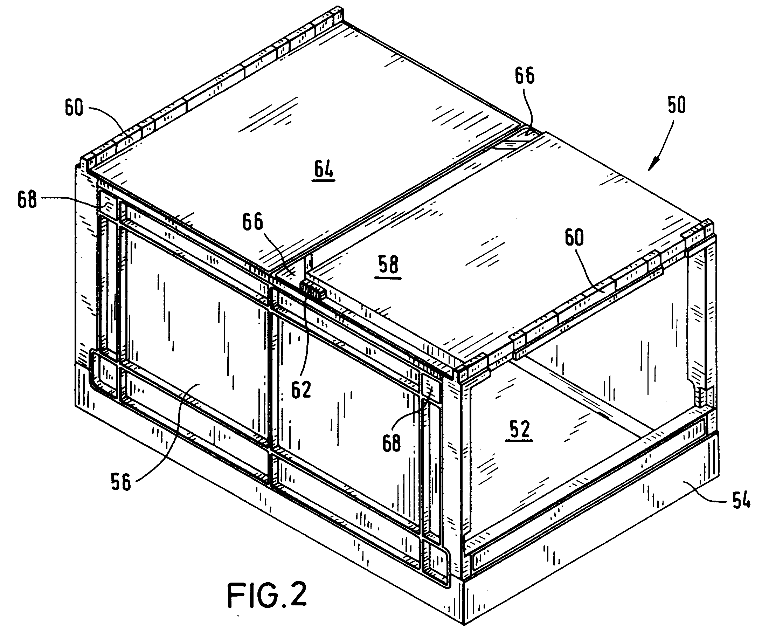

Der Transportbehälter 50 ist mit einer um 270° verschwenkbar an einem Scharnier 60 gelagerten vorderen bzw. kurzen Seitenwandung 58 ausgestattet. Die Seitenwandung 58 weist für eine Verriegelung an ihren Außenrändern entsprechende Riegel 62 auf. In zugeklappter Position ist die Seitenwandung verriegelt. Zum Aufklappen wird sie entriegelt und in der um 270° nach oben verschwenkten Position gemäß Figur 2 auf die Oberseite der vorderen Deckelhälfte 64 aufgelegt. Die Seitenwandungen 56,58 und Klappdeckelhälften 64 sind gegen ungewolltes Öffnen bzw. unberechtige Warenentnahme mit Plombierungsmitteln versehen.
Besondere Merkmale : Das Scharnier 60 erstreckt sich über die gesamte Breite des Behälters 50 bzw. der Seitenwandung 58. An diesem Scharnier 60 sind die angrenzende Deckelhälfte 64, die um 270 ° verschwenkbare Entnahmeklappe und das seitlich und unten umlaufende Rahmenteil der restlichen Seitenwandung angelenkt. Das seiltich und unten um die Entnahmeklappe umlaufende Rahmenteil der Seitenwandung ist um 90 ° verschwenkbar unten über ein Scharnier mit dem Rahmenteil 54 der Bodenplatte 52 verbunden. In dem umlaufenden Rahmenteil als restliche Seitenwandung sind entsprechende Aussparungen eingeformt, in welche die Riegel 62 der Entnahmeklappe im Verschlußzustand einrasten.
Schließlich sind die Deckelhälften 64 in den zur Behältermitte weisenden Eckbereichen mit Schnappriegeln 66 ausgestattet, die ein schnelles Verriegeln der Deckelhälften im Verschlußzustand ermöglichen. Die gegen eine Federkraft wirkenden dreieckförmigen Eckriegel 66 schnappen beim Verschließen von selbst ein und sind zum Entriegeln und Öffnen der Deckelhälfte in 45° Diagonalrichtung zurückziehbar ausgebildet.

## Patentansprüche

1. Geschlossener, zusammenklappbarer bzw. zusammenfaltbarer Mehrweg-Transportbehälter (50) aus thermo- oder duroplastischem Kunststoff in Rechteckbauweise mit Seitenwandungen (56, 58), einer Bodenplatte (52), geschlossenem Behälterdeckel bzw. geschlossenen Behälterdeckelhäftern (64) und mit einem unteren, an der Bodenplatte (52) umlaufenden Rahmenteil (54), an welchem wenigstens zwei sich gegenüberliegende Seitenwandungen (56) verschwenkbar angelenkt sind, **dadurch gekennzeichnet,** daß wenigstens eine Seitenwandung (58) bzw. Seitenwandungshälfte mittels eines Scharnieres (60) gelenkig um 270° verschwenkbar gelagert ist, und daß
die um 270° verschwenkbare Seitenwandung (58) bzw. Seitenwandungshälfte nach oben verschwenkbar am gleichen Scharnier (60) bzw. Scharnierstift angelenkt ist wie der obere Behälterdeckel bzw. die angrenzende Behälterdeckelhälfte (64).

2. Transportbehälter nach Anspruch 1,
**dadurch gekennzeichnet,** daß
die nach oben verschwenkbare Seitenwandung (58) bzw. Seitenwandungshälfte auf den geschlossenen Deckel bzw. auf eine Deckelhälfte (64) auflegbar ist.

3. Transportbehälter nach Anspruch 1 oder 2,
**dadurch gekennzeichnet,** daß
die Seitenwandung in Horizontalebene hälftig geteilt ausgebildet ist und eine Hälfte nach oben und die andere Hälfte nach unten verschwenkbar gelagert ist.

4. Transportbehälter nach Anspruch 1, 2 oder 3,
**dadurch gekennzeichnet,** daß
lediglich ein oberes Teilstück (Stirnklappe) der Seitenwandung (58) als Entnahmeklappe mit am oberen Deckelscharnier (60) angelenkt und um 270° verschwenkbar gelagert ist, wobei die restliche Seitenwandung als seitlich und unten umlaufendes Rahmenteil verbleibt.

5. Transportbehälter nach Anspruch 4,
**dadurch gekennzeichnet,** daß
die Größe des Teilstückes zwischen ca. 50 % und 90 % der Größe der Seitenwandung (58) beträgt.

6. Transportbehälter nach Anspruch 1, 2, 3, 4 oder 5,
**dadurch gekennzeichnet,** daß
sich das Scharnier (60) über die gesamte Breite des Behälters (50) bzw. der Seitenwandung (58) erstreckt.

7. Transportbehälter nach Anspruch 4, 5 oder 6,
**dadurch gekennzeichnet,** daß
das seitlich und unten um das obere rechtwinkelige Teilstück (= Stirnklappe) bzw. die Entnahmeklappe umlaufende Rahmenteil der restlichen Seitenwandung unten über ein Scharnier verschwenkbar mit dem Rahmenteil (54) der Bodenplatte (52) verbunden ist.

8. Transportbehälter nach Anspruch 4, 5, 6 oder 7,
**dadurch gekennzeichnet,** daß
das obere rechtwinkelige Teilstück (= Stirnklappe) der Seitenwandung (58) als Entnahmeklappe mit Regeln (62) und das seitlich und unten um die Entnahmeklappe umlaufende Rahmenteil als restliche Seitenwandung mit entsprechenden Aussparungen versehen ist, in welche die Riegel (62) im Verschlußzustand einrasten.

9. Transportbehälter nach einem der vorhergehenden Ansprüche 1 bis 8,
**dadurch gekennzeichnet,** daß
die Seitenwandungen (56, 58) und Klappdeckelhälften (64) mit Plombierungsmitteln versehen sind.

10. Transportbehälter nach einem der vorhergehenden Ansprüche 1 bis 9,
**dadurch gekennzeichnet,** daß
die Deckelhälften (64) in den zur Behältermitte weisenden Eckbereichen mit Schnappriegeln (66) ausgestattet sind.

11. Transportbehälter nach einem der vorhergehenden Ansprüche 1 bis 10,
**dadurch gekennzeichnet,** daß
die gegen eine Federkraft wirkenden Eckriegel (66) beim Verschließen von selbst einschnappbar und zum Entriegeln und Öffnen der Deckelhälften zurückziehbar ausgebildet sind.

## Claims

1. A closed, collapsible or folding, reusable transportation container (50) made of thermoplastics or thermosetting plastics and of rectangular construction, comprising sidewalls (56, 58), a base plate (52), a closed container cover or closed container cover halves (64) and a lower frame part (54) which surrounds the base plate (52) and on which at least two opposing sidewalls (56) are pivotably articulated, characterised in that at least one sidewall (58) or sidewall half is mounted so as to pivot through 270° by means of a hinge (60) and in that the sidewall (58) or sidewall half, pivotable through 270°, is articulated so as to be upwardly pivotable on the same hinge (60) or hinge pin as the upper container cover or adjacent container cover half (64).

2. A transportation container according to claim 1, characterised in that the upwardly pivotable sidewall (58) or sidewall half is placeable on the closed cover or on a cover half (64).

3. A transportation container according to claim 1 or 2, characterised in that the sidewall is divided in half in a horizontal plane and one half is mounted so as to pivot upwards and the other half is mounted so as to pivot downwards.

4. A transportation container according to claim 1, 2 or 3, characterised in that only an upper portion (front flap) of the sidewall (58) is articulated as a dispensing flap on the upper cover hinge (60) and is mounted so as to be pivotable through 270°, the remainder of the sidewall serving as a frame part surrounding the sides and the bottom.

5. A transportation container according to claim 4, characterised in that the size of the sidewall portion is between approx. 50% and 90% of the size of the sidewall (58).

6. A transportation container according to claim 1, 2, 3, 4 or 5, characterised in that the hinge (60) extends over the entire breadth of the container (50) or the sidewall (58).

7. A transportation container according to claim 4, 5 or 6, characterised in that the frame part, being the remainder of the sidewall and surrounding the sides and the bottom of the upper rectangular portion (= front flap) or dispensing flap, is pivotably connected at the bottom to the frame part (54) of the base plate (52) by means of a hinge.

8. A transportation container according to claim 4, 5, 6 or 7, characterised in that the upper rectangular portion (= front flap) of the sidewall (58) as the dispensing flap is provided with fasteners (62), and the frame part, being the remainder of the sidewall and surrounding the sides and the bottom of the dispensing flap, is provided with corresponding recesses in which the fasteners (62) engage when the flap is closed.

9. A transportation container according to any one of the preceding claims 1 to 8, characterised in that the sidewalls (56, 58) and the flap cover halves (64) are provided with sealing means.

10. A transportation container according to any one of the preceding claims 1 to 9, characterised in that the cover halves (64) are provided with snap fasteners (66) in the corner regions pointing towards the centre of the container.

11. A transportation container according to any one of the preceding claims 1 to 10, characterised in that the corner fasteners (66), acting in the direction of an elastic force, snap in place automatically on closing and are retractable to release and open the cover halves.

## Revendications

1. Récipient de transport (50) réutilisable, fermé, pliable, en matière synthétique thermoplastique ou thermodurcissable, qui est de construction rectangulaire avec des parois latérales (56), (58), une plaque de fond (52) et un couvercle respectivement des moitiés de couvercle (64) fermées, et, qui comporte un cadre inférieur (54) continu sur tout le pourtour de la plaque de fond (52), sur lequel sont articulées au moins deux parois latérales (56) se faisant face, *caractérisée en ce que* au moins une paroi latérale (58) ou une moitié de paroi latérale, est articulée autour d'une charnière (60) avec un angle de pivotement de 270° et *en ce que* ladite paroi latérale (58) ou la moitié de paroi latérale pivotant d'un angle de 270° est articulée en pouvant pivoter vers le haut autour de la même charnière (60) ou cheville de charnière que le couvercle supérieur du récipient ou la moitié de couvercle (64) contiguë.

2. Récipient de transport selon la revendication 1 *caractérisé en ce que* la paroi latérale (58) ou la moitié de paroi latérale pivotant vers la haut peut être rabattue sur le couvercle,respectivement la moitié de couvercle (64), alors qu'il est fermé.

3. Récipient de transport selon les revendications 1 ou 2 *caractérisé en ce que* la paroi latérale est subdivisée dans le plan horizontal en deux moitiés dont l'une peut pivoter vers le haut tandis que l'autre moitié peut pivoter vers le bas.

4. Récipient de transport selon les revendications 1, 2 ou 3 *caractérisé en ce que* seule la partie supérieure (volet frontal) de la paroi latérale (58) est articulée avec un angle de pivotement de 270° sur la charnière (60) du couvercle supérieur en vue de servir de volet de prélèvement, la partie restante de la paroi latérale formant les parties latérales et inférieure d'un cadre continu.

5. Récipient de transport selon la revendication 4 *caractérisé en ce que* la dimension de la partie supérieure articulée (volet frontal) représente entre 50% et 90% de la dimension totale de la paroi latérale (58).

6. Récipient de transport selon les revendications 1, 2, 3, 4 ou 5 *caractérisé en ce que* la charnière (60) s'étend sur toute la largeur du récipient (50), respectivement de la paroi latérale (58).

7. Récipient de transport selon les revendications 4, 5 ou 6 *caractérisé en ce que* la partie restante de la paroi latérale formant les parties latérales et inférieure du cadre entourant la partie supérieure rectangulaire (volet frontal) ou volet de prélèvement, est articulée en bas par une charnière sur la partie de cadre (54) de la plaque de fond (52).

8. Récipient de transport selon les revendications 4, 5, 6 ou 7 *caractérisé en ce que* la partie supérieure rectangulaire (volet frontal) de la paroi latérale (58), qui sert de volet de prélèvement, est pourvue de verrous (62) coopérant avec des encoches correspondantes prévues dans la partie restante de la paroi latérale entourant ledit volet de prélèvement latéralement et en bas, les verrous (62) se bloquant dans lesdites encoches en position de verrouillage.

9. Récipient de transport selon l'une des revendications 1 à 8 *caractérisé en ce que* les parois latérales (56), (58) et les moitiés de couvercle pivotantes (64) sont pourvues de moyens de plombage.

10. Récipient de transport selon l'une des revendications 1 à 9 *caractérisé en ce que* les moitiés de couvercle (64) sont pourvues, dans leurs zones d'angle orientées vers le milieu du récipient, de verrous à déclic (66).

11. Récipient de transport selon l'une des revendications 1 à 10 *caractérisé en ce que* les verrous à déclic agissant à l'encontre d'une force de ressort s'engagent automatiquement lors de la fermeture et sont rétractables lors du déverrouillage et de l'ouverture des moitiés de couvercle.
